# FASCICULE DE BREVET EUROPEEN

(11) **EP 3 060 888 B1**
(45) Date de publication et mention de la délivrance du brevet: **07.11.2018**
(21) Numéro de dépôt: 14805973.6
(22) Date de dépôt: 22.10.2014
(51) Int. Cl.: G01D 11/30

(54) **PROCEDE DE FIXATION D'UN CAPTEUR SUR UN SUPPORT**
VERFAHREN ZUR BEFESTIGUNG EINES SENSORS AN EINEM TRÄGER
METHOD FOR SECURING A SENSOR TO A SUPPORT

(30) Priorité: 25.10.2013 FR 1360431
(43) Date de publication de la demande: 31.08.2016
(73) Titulaire: Valeo Systèmes de Contrôle Moteur, 95800 Cergy Saint Christophe (FR)
(72) Inventeur: RAMPILLON, Florent, F-78600 Maisons Lafitte (FR); MATEOS- BUGATTI, Manuela, F-95520 Osny (FR); LE CUNFF, Didier, F-78955 Carriere Sous Poissy (FR); LOPES, Christophe, F-95110 Sannois (FR)
(74) Mandataire: Garcia, Christine
(86) Numéro de dépôt international: PCT/FR2014/052679
(87) Numéro de publication internationale: WO 2015/059405

(56) Documents cités:
- WO-A1-2010/086360
- FR-A- 1 356 230
- FR-A1- 2 789 758
- FR-A1- 2 918 221
- FR-A3- 2 977 387

## Description

La présente invention concerne la fixation d'un capteur sur un support.

L'invention s'applique notamment, mais non exclusivement, dans le domaine automobile. Le capteur est par exemple un capteur de position, et le support est par exemple intégré à un capot d'un composant électro-mécanique du circuit d'air d'un moteur thermique de véhicule. Le composant électro-mécanique est par exemple une vanne.

Au sens de l'invention, on désigne par « circuit d'air de moteur thermique » le circuit entre l'entrée d'admission et la sortie d'échappement du moteur thermique. La vanne peut être disposée dans le circuit d'admission, le circuit d'échappement, ou dans une boucle de recirculation par laquelle transitent les gaz d'échappement réinjectés à l'admission (EGR en anglais).

Il s'agit notamment d'un capot d'une vanne de recirculation des gaz d'échappement.

Pour fixer le capteur sur le support, il est connu de le surmouler sur le support, ou de le maintenir en position sur ce dernier au moyen d'une résine.

Les modes de fixation connus du capteur sur le support ne sont pas satisfaisants car ils supposent des étapes additionnelles coûteuses.

WO2010/086360 divulgue un procédé de fixation de l'art antérieur, selon le préambule de la revendication 1.

Il existe un besoin pour permettre la fixation d'un capteur sur un support de manière simple, efficace et peu coûteuse.

L'invention répond à ce besoin à l'aide d'un procédé de fixation d'un capteur sur un support selon la revendication 1.

Grâce au procédé ci-dessus, le capteur est maintenu en position par rapport au support sans qu'il soit besoin d'ajouter une pièce intermédiaire, mais par sertissage d'une pièce déjà existante.

Un tel maintien en position peut permettre de ne pas dégrader la précision du capteur malgré les vibrations. Ce maintien du capteur peut aussi faciliter la connexion de pattes électriques du capteur à une grille de connexion (« leadframe » en anglais) de manière à alimenter électriquement le capteur et à permettre l'exploitation des mesures qu'il fournit.

La zone de sertissage du support peut à la fois : servir à délimiter la zone de réception, et ainsi à maintenir avant leur déformation le capteur selon certaines directions, et servir à maintenir le capteur selon d'autres directions, une fois la déformation effectuée.

La déformation peut consister à rabattre des portions de la zone de sertissage sur tout ou partie de la zone en saillie du capteur. Une fois la déformation effectuée, la zone en saillie peut être localement disposée entre la zone de réception et les parties rabattues de la zone de sertissage.

La zone de sertissage peut être réalisée en matière(s) plastique(s).

Tout ou partie de la zone de sertissage peut être déformée en soumettant cette dernière à un échauffement ainsi qu'à une force mécanique. Un sertissage de cette zone peut ainsi avoir lieu pour immobiliser le capteur par action sur sa zone en saillie. Seule la zone de sertissage peut être soumise à des contraintes thermiques et/ou mécaniques, de sorte que le capteur n'est pas endommagé.

La force mécanique peut être appliquée sur la zone de sertissage pendant une durée supérieure à celle pendant laquelle ladite zone est soumise à l'échauffement. L'échauffement peut par exemple débuter alors que la zone de sertissage est déjà soumise à la force mécanique.

La température appliquée pour déformer la zone de sertissage peut varier lors de l'échauffement, afin d'augmenter l'efficacité de l'opération de sertissage tout en réduisant les contraintes thermiques appliquées sur le capteur. Le profil de température appliqué peut permettre que la température de la zone de sertissage soit supérieure à la température de transition vitreuse du matériau constituant ladite zone, de manière à pouvoir ramollir sans être fragilisé, sans pour autant que cet échauffement ne conduise à un chauffage excessif du capteur. L'échauffement comprend par exemple:
- une phase d'augmentation progressive de la température d'un premier niveau de température à un deuxième niveau de température,
- une phase pendant laquelle on applique le deuxième niveau de température pour déformer tout ou partie de la zone de sertissage, et
- une phase de refroidissement.

Le premier niveau de température est par exemple compris entre 100 °C et 180 °C.

Le deuxième niveau de température peut être déterminé en fonction du matériau de la zone de sertissage, étantpar exemple compris entre 220 °C et 260 °C.

L'échauffement peut comprendre une phase préliminaire selon laquelle on applique le premier niveau de température à la zone de sertissage. La phase préliminaire peut permettre de réduire la durée de l'échauffement. La force mécanique appliquée sur le capteur peut être comprise entre 150 N et 250 N.

La force mécanique et l'échauffement peuvent être appliqués par un seul et même outil, comme on le verra par la suite.

Le capteur est par exemple un capteur de position. Il s'agit notamment d'un capteur à effet Hall.

Le boîtier peut présenter une forme parallélépipédique et la zone en saillie peut être ménagée sur deux faces différentes, notamment opposées, du boîtier. La zone en saillie peut alors s'étendre de façon discontinue sur le boîtier, comportant par exemple plusieurs portions distinctes.

La zone de réception est par exemple sensiblement plane et la zone de sertissage peut comprendre au moins deux parois s'étendant sensiblement perpendiculairement depuis la zone de réception. La partie de la zone de sertissage déformée selon le procédé ci-dessus peut être uniquement celle à distance de la zone de réception, c'est-à-dire la partie distale de la zone de sertissage lorsque cette dernière est observée depuis la zone de réception.

Lorsque le capteur est en regard de la zone de réception, chaque paroi appartenant à la zone de sertissage peut être en regard d'une face du boîtier sur laquelle la zone en saillie est ménagée. Chaque paroi peut ainsi coopérer avec une portion de la zone en saillie afin de maintenir le capteur sur le support après déformation.

Le capteur peut comprendre un deuxième boîtier solidaire du boîtier précité, qui est alors un premier boîtier, et distinct de ce dernier. Les deux boîtiers peuvent être de dimensions sensiblement identiques. La connexion électrique du premier boîtier vers l'extérieur peut se faire via le deuxième boîtier. Une ou plusieurs premières pattes électriques peuvent relier le premier boîtier et le deuxième boîtier. Une ou plusieurs deuxièmes pattes électriques peuvent s'étendre depuis le deuxième boîtier jusqu'à une extrémité libre permettant la connexion du capteur vers l'extérieur.

Le nombre des premières pattes électriques peut ou non être égal au nombre des deuxièmes pattes électriques.

Le cas échéant, le deuxième boîtier peut également présenter une zone en saillie, et le support peut comprendre une autre zone de sertissage coopérant avec ladite zone en saillie du deuxième boîtier, similairement à ce qui a été décrit ci-dessus en référence au premier boîtier pour assurer la fixation du deuxième boîtier sur le support. En variante, le deuxième boîtier peut ne pas être directement fixé sur le support mais cette fixation s'effectue indirectement, grâce à la fixation décrite ci-dessus du premier boîtier sur le support. La zone en saillie du deuxième boîtier peut alors permettre un positionnement du capteur dans la zone de réception du support.

Le premier boîtier peut comprendre l'élément de détection de position, notamment l'élément de mesure du champ magnétique dans le cas d'un capteur à effet Hall, et le deuxième boîtier peut comprendre des condensateurs de découplage, permettant notamment de satisfaire des exigences en termes de décharge électrostatique et de compatibilité électromagnétique.

Le capteur peut être dépourvu de circuit imprimé (PCB en anglais).

Le support peut être intégré à un composant électro-mécanique de véhicule automobile, notamment au capot d'un tel composant. Le composant électro-mécanique est par exemple une vanne de circuit d'air du moteur thermique du véhicule. Le capteur peut alors permettre de mesurer la position du volet de la vanne.

La vanne est par exemple une vanne régulant le débit de gaz d'échappement dans la boucle de recirculation du circuit d'air permettant auxdits gaz d'être réinjectés à l'admission du moteur (encore appelée « boucle EGR »). En variante, la vanne peut être une vanne dite « trois voies » disposée à l'entrée ou à la sortie de ladite boucle EGR.

La boucle EGR peut être une boucle « haute pression » ou « basse pression ».

En variante encore, la vanne peut être un doseur du circuit d'air.

L'invention a encore pour objet, selon un autre de ses aspects, un ensemble comprenant le support et le capteur, ces derniers étant fixés à l'aide du procédé décrit ci-dessus.

L'invention a encore pour objet, selon un autre de ses aspects, un outil pour la mise en oeuvre du procédé tel que décrit ci-dessus, l'outil étant configuré pour déformer tout ou partie de la zone de sertissage du support.

L'outil peut comprendre:
- au moins une surface d'appui, configurée pour coopérer avec tout ou partie de la zone de sertissage pour exercer une force mécanique sur celle-ci, et
- un organe de chauffage, configuré pour appliquer un échauffement sur tout ou partie de la zone de sertissage.

L'outil peut comprendre des moyens de commande lui permettant de faire varier la température appliquée sur la zone de sertissage lors de l'échauffement, permettant notamment l'application des différentes phases mentionnées ci-dessus.

L'outil peut comprendre un organe de guidage associé à la surface d'appui, de manière à guider dans une ou plusieurs directions prédéfinies le déplacement de matière de la zone de sertissage occasionné par la déformation de tout ou partie de celle-ci. Cette surface de guidage permet que la déformation de la zone de sertissage provoque un rabattement de celle-ci en regard de la zone en saillie afin de venir au contact de celle-ci et d'exercer sur cette dernière une contrainte dirigée vers la zone de réception. Le capteur peut ainsi être fixé au support avec un jeu nul.

L'invention pourra être mieux comprise à la lecture de la description qui va suivre d'un exemple non limitatif de mise en oeuvre de celle-ci et à l'examen du dessin annexé sur lequel :
- la figure 1 représente de façon schématique un exemple d'environnement au sein duquel peut être mise en oeuvre l'invention,
- la figure 2 est un détail de la figure 1,
- la figure 3 est une vue en coupe selon A-A de la figure 2, représentant le support et le capteur avant fixation,
- la figure 4 représente le support et le capteur de la figure 3 après que le capteur a été fixé sur le support,
- la figure 5 représente l'évolution des contraintes mécaniques et thermiques appliquées lors de la mise en oeuvre du procédé, et
- la figure 6 représente un exemple d'outil pouvant être utilisé pour mettre en oeuvre le procédé de fixation du capteur sur le support.

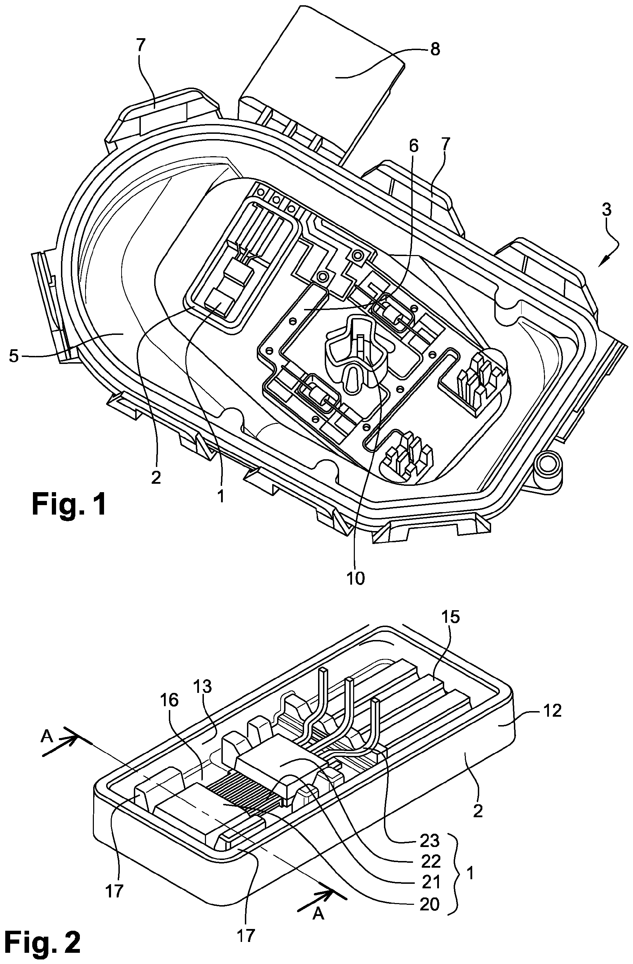

On a représenté à la figure 1 un exemple d'environnement au sein duquel peut être mis en l'oeuvre le procédé selon l'invention.

Dans l'exemple décrit, le procédé permet de fixer un capteur 1 sur un support 2 intégré à un capot 3 d'une vanne de circuit d'air d'un moteur thermique. La vanne est par exemple une vanne régulant le débit des gaz EGR dans une boucle de recirculation ou une vanne régulant le débit de ces gaz réinjectés à l'admission du moteur.

Le capot 3 comprend dans l'exemple considéré une paroi 5 en matière plastique sur laquelle sont déposées des pistes électriquement conductrices 6.

Le capot 3 comprend encore dans l'exemple décrit des moyens d'interface mécanique 7 avec le corps de la vanne non représenté, par exemple par encliquetage, et des moyens d'interface électrique 8 avec un dispositif d'alimentation électrique et/ou de contrôle non représenté.

Comme représenté sur la figure 1, le capot peut encore comprendre un palier 10 lui permettant d'être correctement positionné par rapport au corps de la vanne grâce à un arbre intermédiaire non représenté. Cet arbre intermédiaire fait ici partie d'un étage de transmission au volet de la vanne du mouvement généré par un moteur électrique.

Le contenu de la demande déposée en France par la Demanderesse le 12 octobre 2012 sous le numéro 12 59740 est incorporé à la présente demande par référence, au moins en ce qui concerne les moyens de mise à la masse via l'arbre intermédiaire du moteur électrique utilisé pour déplacer le volet de la vanne.

Le support 2 représenté plus en détail sur la figure 2 peut être rapporté sur le capot 3 ou former une partie de ce dernier.

Comme représenté sur la figure 2, le support 2 peut présenter un rebord périphérique 12 s'étendant autour dudit support 2 et définissant un espace intérieur 13.

Une partie de cet espace intérieur 13 forme dans l'exemple considéré un logement pour le capteur 1 tandis qu'une autre partie de l'espace 13 reçoit des pistes électriques 15 permettant le raccordement électrique du capteur 1 aux moyens de connexion 8 du capot 3.

Comme on peut le voir sur la figure 2, le fond de la partie de l'espace intérieur 13 formant le logement pour le capteur 1 peut être plan et définir une zone de réception 16 pour le capteur 1.

Dans l'exemple considéré, deux parois 17 s'étendent depuis la zone de réception 16, de façon sensiblement perpendiculaire à la zone de réception 16, et ces parois 17 sont ici sensiblement parallèles entre elles. Les parois 17 forment une zone de sertissage, comme expliqué ci-après.

Ces parois 17 sont ici réalisées en matière plastique et elles peuvent être réalisées d'une seule pièce ou non avec la zone de réception 16.

Comme on peut le voir sur la figure 2, le capteur 1 se présente dans l'exemple décrit sous la forme de deux boîtiers 20 et 21 connectés entre eux électriquement et mécaniquement par des premières pattes électriques 22. Ces premières pattes électriques 22 peuvent être rigides, de sorte que le premier boîtier 20 est solidaire du deuxième boîtier 21. Chaque boîtier 20 ou 21 peut être obtenu par moulage de matière(s) plastique(s).

Chacun des boîtiers 20 ou 21 présente dans cet exemple une même forme parallélépipédique, ayant les mêmes dimensions d'un boîtier à l'autre. Le premier boîtier 20 sert dans l'exemple considéré à loger un élément de détection d'un champ magnétique pour effectuer une détection de position du volet de la vanne. Le second boîtier 22 loge dans cet exemple des condensateurs de découplage.

Le capteur 1 comprend encore dans cet exemple des deuxièmes pattes électriques 23 destinées à permettre la connexion électrique du deuxième boîtier 21, et donc du capteur 1, aux pistes électriques 15.

Le capteur est par exemple celui commercialisé par la société MELEXIS^{R} sous la référence commerciale MLX90364 Triaxis^{R}.

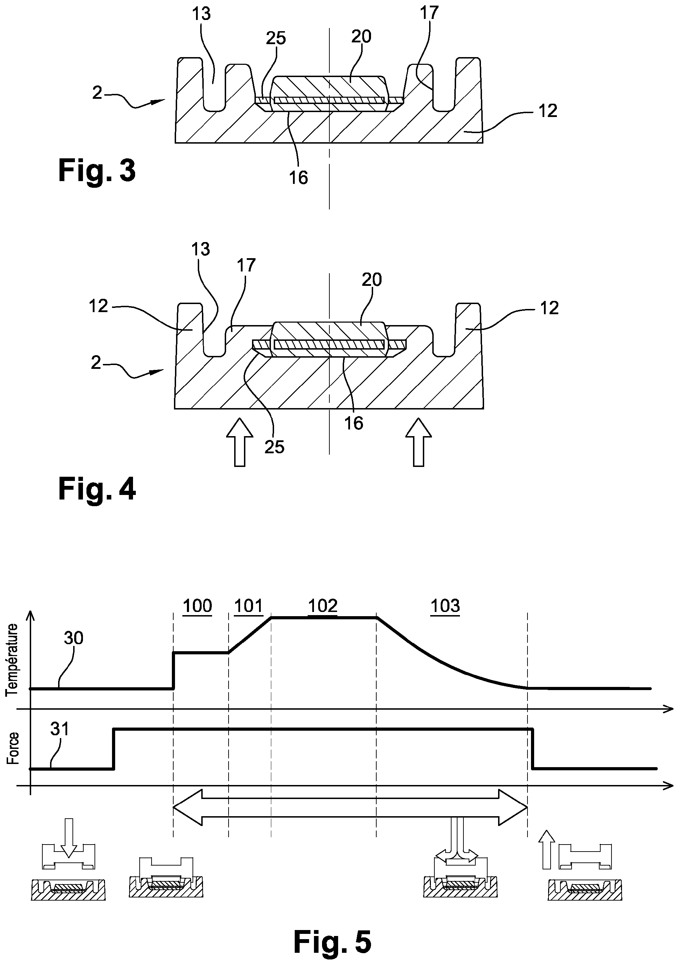

Comme visible sur la figure 3, le premier boîtier 20 porte une zone en saillie 25, ladite zone 25 étant dénommée ainsi car elle fait saillie par rapport au reste de la surface extérieure dudit boîtier 20. Dans l'exemple considéré, cette zone en saillie 25 s'étend sur deux faces opposées du boîtier 20, comprenant alors deux portions chacune portée par une de ces faces. Le deuxième boîtier 21 comprend aussi dans cet exemple une zone en saillie 25.

Lorsque le capteur 1 est reçu dans l'espace intérieur 13, chaque paroi 17 est disposée à proximité d'une portion de la zone en saillie 25.

On va maintenant décrire en référence aux figures 3 à 5 un procédé de fixation du capteur 1 sur le support 2 selon l'invention.

Après une phase préliminaire consistant à amener le capteur 1 au contact de la zone de réception 16, on applique une force mécanique et un échauffement sur les parois 17 de manière à déformer celles-ci afin de les rabattre vers la zone en saillie 25.

La figure 5 représente l'évolution temporelle de l'application de la force mécanique sur les parois 17, selon une courbe 30, et l'évolution temporelle de l'échauffement des parois 17, selon une courbe 31.

Comme représenté sur la figure 5, une force mécanique est d'abord appliquée sur la partie distale des parois 17. Une phase de pré-chauffage 100, lors de laquelle un premier niveau de température est appliqué aux parois 17 se produit ensuite. Ce premier niveau de température est par exemple compris entre 100 °C et 180 °C.

Lors d'une deuxième phase 101, une augmentation, par exemple linéaire, de la température appliquée aux parois 17 d'un premier niveau de température jusqu'à un deuxième niveau de température se produit. Le deuxième niveau de température est par exemple compris entre 220 °C et 260 °C.

Lors d'une troisième phase 102, le deuxième niveau de température est appliqué aux parois, la température demeurant sensiblement constante lors de cette étape 102. Lors d'une quatrième phase 103, un refroidissement des parois 17 est effectué, par exemple en insufflant de l'air frais. A l'issue de la quatrième phase 103, la température des parois 17 peut être sensiblement égale à celle qu'elles avaient au début de la première phase 100.

Comme on peut le voir sur la figure 5, la force mécanique peut être appliquée sur les parois 17 pendant toutes les phases 100 à 103.

L'application combinée d'une force mécanique et d'un échauffement sur les parois 17 permet de déformer la partie distale de ces parois 17, de manière à ce que ces parties distales soient rabattues vers la zone en saillie 25. Les parois 17 prennent alors une forme recourbée pour exercer une force sur la zone en saillie 25, et cette force est dirigée vers la zone de réception 16. Cette force ainsi dirigée permet de maintenir le capteur 1 en position sur le support 2.

A l'issue du procédé selon l'invention, la zone en saillie 25 est localement disposée entre la zone de réception 16 et la partie rabattue des parois 17.

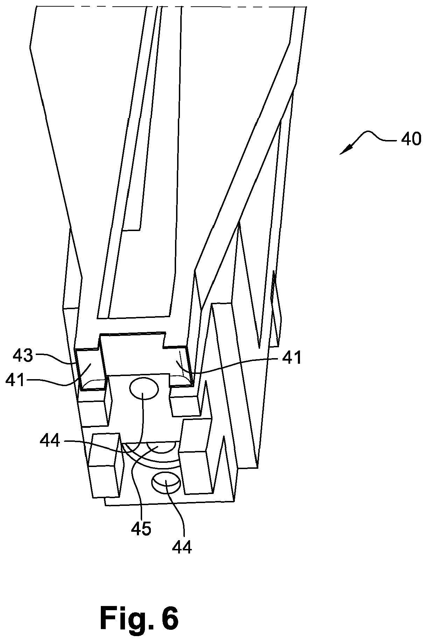

On va maintenant décrire en référence à la figure 6 un exemple d'outil 40 pouvant être utilisé pour mettre en oeuvre le procédé qui vient d'être décrit.

Cet outil 40 permet de déformer tout ou partie des parois 17 du support 2.

L'outil 40 comprend dans l'exemple considéré plusieurs surfaces d'appui 41, chacune étant configurée pour coopérer avec l'extrémité de la partie distale d'une paroi 17 pour exercer une force mécanique sur celle-ci. Cette surface d'appui 41 est par exemple plane, tout comme l'est par exemple l'extrémité libre de chaque partie distale d'une paroi 17.

Un organe de guidage 43 est dans l'exemple décrit associé à chaque surface d'appui 41. L'organe de guidage 43 est ici un rebord s'étendant autour d'une partie de la surface d'appui 41, formant ainsi une barrière le long d'une partie du pourtour de cette surface d'appui 41. L'organe de guidage 43 comprend dans cet exemple trois segments successifs faisant deux à deux un angle droit.

Lorsque l'extrémité d'une partie distale d'une paroi 17 est au contact de la surface d'appui 41, l'organe de guidage 43 s'étend, là où il existe, le long de cette extrémité. La déformation de la partie distale d'une paroi 17 sous l'application combinée d'un échauffement et d'une force mécanique est ainsi empêchée dans certaines directions du fait de la présence dans ces directions de l'organe de guidage 43 qui agit comme une barrière. Cette déformation est alors guidée vers les autres directions du fait de l'absence pour ces directions de l'organe de guidage 43.

L'organe de guidage 43 est ici configuré de sorte que la déformation de la partie distale de la paroi 17 correspondante se fasse vers la zone en saillie 25. La matière ainsi déformée des parois 17 vient alors contraindre la zone en saillie 25, comme expliqué ci-dessus. La matière déformée se place avantageusement grâce à l'outil 40 sur la zone en saillie 25 avec une épaisseur suffisante et sans bavure aux extrémités.

L'outil 40 comprend encore dans l'exemple considéré un organe de chauffage non visible sur la figure 6, configuré pour appliquer un échauffement sur tout ou partie de la zone de sertissage 17.

Deux trous 44 peuvent permettre d'insuffler de l'air chaud sur les parois 17 de manière à réaliser les phases 100 à 102 décrites en référence à la figure 5 tandis qu'un autre trou 45 peut permettre d'insuffler de l'air froid sur les parois 17 de manière à réaliser la phase 103.

L'outil peut encore comprendre des moyens de commande non représentés lui permettant de faire varier la température appliquée sur la zone de sertissage lors de l'échauffement, permettant notamment l'application des différentes phases mentionnées ci-dessus.

L'invention n'est pas limitée aux exemples qui viennent d'être décrits.

L'expression « comprenant un » doit être comprise comme synonyme de l'expression « comprenant au moins un », sauf lorsque le contraire est spécifié.

## Revendications

1. Procédé de fixation d'un capteur (1) sur un support (2), le support (2) comportant une zone de réception (16) pour le capteur (1) et une zone de sertissage (17), le capteur (1) comprenant un boîtier (20) pourvu d'une zone en saillie (25), la zone de réception (16) étant sensiblement plane et la zone de sertissage (17) comprenant au moins deux parois s'étendant sensiblement perpendiculairement depuis la zone de réception (16),
procédé dans lequel :
- on amène le capteur (1) en regard de la zone de réception (16) du support (2) et au contact de tout ou partie de celle-ci, et
- on déforme tout ou partie de la zone de sertissage (17), de manière à ce que la ou lesdites portions de la zone de sertissage (17) ainsi déformées viennent appuyer sur tout ou partie de la zone en saillie (25) afin de maintenir le capteur (1) en position par rapport au support (2), en soumettant la zone de sertissage à un échauffement ainsi qu'à une force mécanique,
procédé **caractérisé en ce que** la température appliquée pour déformer la zone de sertissage (17) varie lors de réchauffement.

2. Procédé selon la revendication 1, dans lequel l'échauffement comprend :
- une phase (101) d'augmentation progressive de la température d'un premier niveau de température à un deuxième niveau de température,
- une phase (102) pendant laquelle on applique le deuxième niveau de température pour déformer tout ou partie de la zone de sertissage, et
- une phase (103) de refroidissement.

3. Procédé selon la revendication 1 ou 2, dans lequel l'échauffement comprend une phase préliminaire (100) pendant laquelle on applique le premier niveau de température à la zone de sertissage (17).

4. Procédé selon l'une quelconque des revendications précédentes, dans lequel le capteur (1) est un capteur de position.

5. Procédé selon l'une quelconque des revendications précédentes, dans lequel le boîtier (20) a une forme parallélépipédique et dans lequel la zone en saillie (25) est ménagée sur deux faces différentes, notamment opposées, du boîtier (20).

6. Procédé selon les revendications 1 à 5, dans lequel lorsque le capteur (1) est en regard de la zone de réception (16), chaque paroi (17) est en regard d'une face du boîtier (20) sur laquelle la zone en saillie (25) est ménagée.

7. Procédé selon l'une quelconque des revendications précédentes, dans lequel le support (2) est intégré à un composant électro-mécanique de véhicule automobile.

8. Procédé selon la revendication 8, dans lequel le composant électro-mécanique est une vanne de circuit d'air du moteur thermique du véhicule automobile.

9. Outil (40) pour la mise en oeuvre du procédé selon l'une quelconque des revendications précédentes, l'outil (40) étant configuré pour déformer tout ou partie de la zone de sertissage (17) du support (2), la zone de sertissage (17) comprenant :
- au moins deux parois s'étendant sensiblement perpendiculairement depuis une zone de réception (16) sensiblement plane,
- au moins une surface d'appui (41), configurée pour coopérer avec tout ou partie de la zone de sertissage (17) pour exercer une force mécanique sur celle-ci, et
- un organe de chauffage, configuré pour appliquer un échauffement sur tout ou partie de la zone de sertissage (17), outil **caractérisé en ce qu'**il comprend en outre des moyens de commande permettant de faire varier la température appliquée sur la zone de sertissage lors de l'échauffement.

10. Outil selon la revendication 9, comportant un organe de guidage (43) associé à la surface d'appui (41) de manière à guider dans une ou plusieurs directions prédéfinies le déplacement de matière de la zone de sertissage (17) occasionné par la déformation de tout ou partie de celle-ci.

## Patentansprüche

1. Verfahren zur Befestigung eines Sensors (1) an einem Träger (2), wobei der Träger (2) eine Aufnahmezone (16) für den Sensor (1) und eine Crimpzone (17) umfasst, wobei der Sensor (1) ein Gehäuse (20) umfasst, das mit einer vorstehenden Zone (25) versehen ist, wobei die Aufnahmezone (16) im Wesentlichen eben ist, und die Crimpzone (17) mindestens zwei Wände umfasst, die sich im Wesentlichen rechtwinklig von der Aufnahmezone (16) erstrecken,
wobei bei dem Verfahren:
- der Sensor (1) gegenüber die Empfangszone (16) des Trägers (2) und in Kontakt mit der gesamten oder einem Teil dieser geführt wird, und
- die gesamte oder ein Teil der Crimpzone (17) derart verformt wird, dass der oder die so verformten Abschnitte der Crimpzone (17) an der gesamten oder einem Teil der vorstehenden Zone (25) anliegen, um den Sensor (1) in Position in Bezug auf den Träger (2) zu halten, indem die Crimpzone einem Erhitzen sowie einer mechanischen Kraft ausgesetzt wird,
wobei das Verfahren **dadurch gekennzeichnet ist, dass** die Temperatur, die ausgeübt wird, um die Crimpzone (17) zu verformen, beim Erhitzen variiert.

2. Verfahren nach Anspruch 1,
wobei das Erhitzen umfasst:
- eine Phase (101) der progressiven Erhöhung der Temperatur von einem ersten Temperaturniveau auf ein zweites Temperaturniveau,
- eine Phase (102), während welcher das zweite Temperaturniveau ausgeübt wird, um die gesamte oder einen Teil der Crimpzone zu verformen, und
- eine Phase (103) des Abkühlens.

3. Verfahren nach Anspruch 1 oder 2,
wobei das Erhitzen eine Vorphase (100) umfasst, während welcher das erste Temperaturniveau auf die Crimpzone (17) ausgeübt wird.

4. Verfahren nach einem der vorhergehenden Ansprüche,
wobei der Sensor (1) ein Positionssensor ist.

5. Verfahren nach einem der vorhergehenden Ansprüche,
wobei das Gehäuse (20) die Form eines Parallelepipeds hat, und wobei die vorstehende Zone (25) auf zwei verschiedenen, insbesondere gegenüberliegenden, Flächen des Gehäuses (20) angeordnet ist.

6. Verfahren nach einem der Ansprüche 1 bis 5,
wobei, wenn der Sensor (1) gegenüber der Aufnahmezone (16) angeordnet ist, jede Wand (17) gegenüber einer Fläche des Gehäuses (20) liegt, auf der die vorstehenden Zone (25) angeordnet ist.

7. Verfahren nach einem der vorhergehenden Ansprüche,
wobei der Träger (2) in einer elektromechanischen Komponente eines Kraftfahrzeugs integriert ist.

8. Verfahren nach Anspruch 8,
wobei die elektromechanische Komponente ein Ventil einer Luftleitung des Verbrennungsmotors des Kraftfahrzeugs ist.

9. Werkzeug (40) zur Durchführung des Verfahrens nach einem der vorhergehenden Ansprüche, wobei das Werkzeug (40) ausgelegt ist, die gesamte oder einen Teil der Crimpzone (17) des Trägers (2) zu verformen, wobei die Crimpzone (17) umfasst:
- mindestens zwei Wände, die sich im Wesentlichen rechtwinklig von einer im Wesentlichen ebenen Aufnahmezone (16) erstrecken,
- mindestens eine Anlagefläche (41), die ausgelegt ist, mit der gesamten oder einem Teil der Crimpzone (17) zusammenzuwirken, um eine mechanische Kraft auf diese auszuüben, und
- ein Heizelement, das ausgelegt ist, ein Erhitzen auf die gesamte oder einen Teil der Crimpzone (17) auszuüben,
wobei das Werkzeug **dadurch gekennzeichnet ist, dass** es außerdem Steuermittel umfasst, die es gestatten, die auf die Crimpzone beim Erhitzen ausgeübte Temperatur zu variieren.

10. Werkzeug nach Anspruch 9, umfassend ein Führungselement (43), das mit der Anlagefläche (41) assoziiert ist, um die Verschiebung von Material von der Crimpzone (17), die von der Verformung der gesamten oder eines Teils dieser hervorgerufen wird, in eine oder mehrere vordefinierte Richtungen zu führen.

## Claims

1. Method for securing a sensor (1) to a support (2), the support (2) comprising a receiving zone (16) for the sensor (1) and a crimping zone (17), the sensor (1) comprising a housing (20) provided with a protruding zone (25), the receiving zone (16) being substantially planar and the crimping zone (17) comprising at least two walls extending substantially perpendicularly from the receiving zone (16),
in which method:
- the sensor (1) is brought to face the receiving zone (16) of the support (2) and into contact with all or part thereof, and
- all or part of the crimping zone (17) is deformed in such a way that the said portion or portions of the crimping zone (17) which are thus deformed press against all or part of the protruding zone (25) so as to hold the sensor (1) in position with respect to the support (2), by subjecting the crimping zone to heating and to a mechanical force, the method being **characterized in that** the temperature applied in order to deform the crimping zone (17) varies during the heating.

2. Method according to Claim 1, in which the heating involves:
- a phase (101) of progressively increasing the temperature from a first temperature level to a second temperature level,
- a phase (102) during which the second temperature level is applied in order to deform all or part of the crimping zone, and
- a cooling phase (103).

3. Method according to Claim 1 or 2, in which the heating involves a preliminary phase (100) during which the first temperature level is applied to the crimping zone (17).

4. Method according to any one of the preceding claims, in which the sensor (1) is a position sensor.

5. Method according to any one of the preceding claims, in which the housing (20) has a parallelepipedal shape and in which the protruding zone (25) is formed on two different, notably opposite, faces of the housing (20).

6. Method according to one of Claims 1 to 5, in which when the sensor (1) is facing the receiving zone (16), each wall (17) faces a face of the housing (20) on which face the protruding zone (25) is formed.

7. Method according to any one of the preceding claims, in which the support (2) is incorporated into a motor vehicle electromechanical component.

8. Method according to Claim 8, in which the electromechanical component is a motor vehicle combustion engine air circuit valve.

9. Tool (40) for implementing the method according to any one of the preceding claims, the tool (40) being configured to deform all or part of the crimping zone (17) of the support (2), the crimping zone (17) comprising:
- at least two walls extending substantially perpendicularly from a substantially planar receiving zone (16),
- at least one bearing surface (41) configured to collaborate with all or part of the crimping zone (17) in order to apply a mechanical force thereto, and
- a heating member, configured to apply heating to all or part of the crimping zone (17),
**characterized in that** it further comprises control means that make it possible to vary the temperature applied to the crimping zone during the heating.

10. Tool according to Claim 9, consisting of a guide member (43) associated with the bearing surface (41) so as to guide in one or more predefined directions the movement of material of the crimping zone (17) which movement is caused by the deformation of all or part of this zone.
